# EUROPEAN PATENT SPECIFICATION

(11) **EP 3 076 601 B1**
(45) Date of publication and mention of the grant of the patent: **02.05.2018**
(21) Application number: 15305467.1
(22) Date of filing: 31.03.2015
(51) Int. Cl.: H04L 12/26, H04L 12/24, H04B 3/46, H04M 3/30

(54) **METHOD AND DEVICE FOR PREDICTING THE ATTAINABLE BITRATE OF A TELECOMMUNICATION LINE**
VERFAHREN UND VORRICHTUNG ZUR VORHERSAGE DER ERREICHBAREN BITRATE EINER FERNMELDELEITUNG
PROCÉDÉ ET DISPOSITIF PERMETTANT DE PRÉDIRE LE DÉBIT BINAIRE POUVANT ÊTRE ATTEINT SUR UNE LIGNE DE TÉLÉCOMMUNICATION

(43) Date of publication of application: 05.10.2016
(73) Proprietor: Alcatel Lucent, 91620 Nozay (FR)
(72) Inventor: Wahibi, Issam, 2018 Antwerpen (BE); Drooghaag, Benoît, 6041 Gosselies (BE)
(74) Representative: Nokia Bell Patent Attorneys

(56) References cited:
- EP-A1- 2 645 633
- EP-A1- 2 787 653
- Alcatel-Lucent: "TELENOR ACHIEVES COMPETITIVE ADVANTAGE IN ULTRA-BROADBAND", , 4 August 2014 (2014-08-04), pages 1-4, XP055213693, Retrieved from the Internet: URL:http://www.tmcnet.com/tmc/whitepapers/ documents/whitepapers/2014/10448-telenor-a chieves-competitive-advantage-ultra-broadb and.pdf [retrieved on 2015-09-16]
- James Schlechter: "D SL LOOP PRE-QUALIFIC ATION SOFT WARE", , 22 October 2012 (2012-10-22), XP055213695, Retrieved from the Internet: URL:https://www.tno.nl/media/2417/spider_f lyer.pdf [retrieved on 2015-09-16]

## Description

### FIELD OF THE INVENTION

The present invention relates to the field of telecommunications. In particular, the present invention relates to a method and a device for predicting the attainable bitrate of a telecommunication line after upgrading from an origin DSL technology to a target DSL technology.

### BACKGROUND

Various Digital Subscriber Line (DSL) technologies have been proposed. The old DSL technologies like ADSL, ADSL2 or ADSL2+ are bit by bit replaced by newer technologies such as VDSL2, Vectoring and upcoming Vplus or G.fast standards. The upgrade operation of the DSL technology to another is a very delicate operation because it must be performed without impacting the quality of service. The DSL operator must quantify reliably the gain of bitrate achievable thanks to the new technology before proposing the upgrade to the customer.

It has been proposed to predict the attainable bitrate of a DSL line, starting from an original DSL technology to a new target DSL technology, in function of collected operational parameters of the line and of on some assumptions about the environment of the line (noise level, physical characteristic of the line, theoretical models, modem properties ...) usually referred as "expert settings". However, these assumptions may be correct for some lines and less for others, or verified for an operator and approximated for another.

For this reason and before predicting attainable bitrates on a large scale, DSL operators usually perform a field trial. These validation tests consist of comparing the predicted attainable bitrates on a limited number of lines, with the attainable bitrate after a real physical upgrade to the same target technology using the same configuration. Often, an expert must achieve a tuning of some expert settings so that the comparison is satisfactory. This means that an adaptation of the prediction assumptions must be done to meet the operator environment and constraints. These validation tests generates some delay and human resources efforts.

The following documents describe techniques for predicting or estimating a DSL bitrate: Alcatel-Lucent "TELENOR ACHIEVES COMPETITIVE ADVANTAGE IN ULTRA BROADBAND", 4 August 2014, James Schlechter "DSL LOOP PRE-QUALIFICATION SOFTWARE", EP 2 787 653 and EP 2 645 633.

### SUMMARY

It is thus an object of embodiments of the present invention to propose methods and devices for predicting the attainable bitrate of a telecommunication line, which do not show the inherent shortcomings of the prior art.

Accordingly, embodiments relate to a method according to claim 1.

Correspondingly, embodiments relate to a prediction device according to claim 9.

Accordingly, since the prediction for a second telecommunication line takes into account a comparison of the predicted and measured attainable bitrates for a first telecommunication lines, the quality of the prediction may be improved.

The method may comprise iterating the step of determining a prediction of the attainable bitrate of the at least one second telecommunication line for successive groups of at least one telecommunication line.

In some embodiments, determining a prediction of the attainable bitrate of the at least one second telecommunication line comprises:
- determining a correction in function of the difference between the prediction of the attainable bitrate and the measured attainable bitrate of the at least one first telecommunication line,
- determining an estimate of prediction of the attainable bitrate of the at least one second telecommunication line,
- substracting the correction from the estimate.

In some embodiments, determining a prediction of the attainable bitrate of the at least one second telecommunication line comprises:
- adapting a prediction algorithm in function the prediction of the attainable bitrate and the measured attainable bitrate of the at least one first telecommunication line by changing at least one prediction parameter used by the prediction algorithm,
- determining the prediction of the attainable bitrate of the at least one second telecommunication line by using the adapted prediction algorithm.

The prediction parameters may include at least one of a noise level, a physical characteristic of the second telecommunication line, a theoretical model and a modem property.

The prediction of the attainable bitrate of the at least one second telecommunication line may also be determined in function of a category of the second telecommunication line.

Embodiments also relate to a computer program product comprising instructions which, when executed on a computer, cause the computer to carry out the method mentioned above.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of an telecommunication network comprising a prediction device for predicting the attainable bitrate of telecommunication lines,
Figure 2 is a flowchart of a method executed by the prediction device of Figure 1, and
Figure 3 is a structural view of the prediction device of Figure 1.

### DESCRIPTION OF EMBODIMENTS

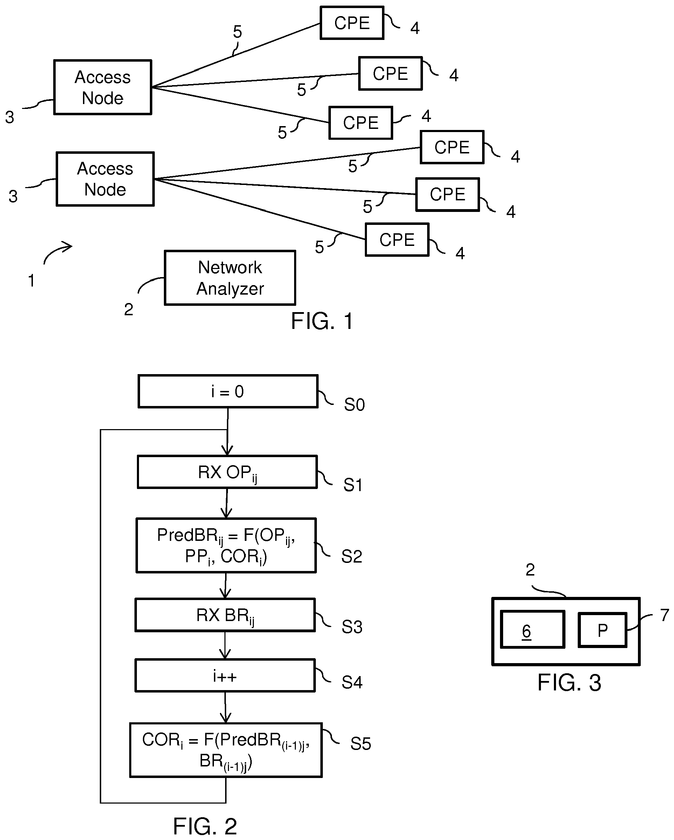

**Figure 1** is a partial view of telecommunication network 1. The telecommunication network 1 comprises a prediction device 2, a plurality of access nodes 3, a plurality of customer premises equipments 4 and a plurality of telecommunication lines 5 connecting respective customer premises equipments 4 to one of the access nodes 3.

An access node 3 and a customer premises equipments 4 use a DSL technology for communication over the telecommunication line 5. For example, the access node 3 is or comprise a DSLAM and the customer premises equipments 4 is or comprise a user's DSL modem. We consider a case wherein the operator of the telecommunication network 1 plans to upgrade at least some of the telecommunication lines 5 from an origin DSL technology to a target DSL technology (for example from ADSL2 to VDSL2).

The prediction device 2 is capable of communicating with the access nodes 3 and/or the customer premises equipments 4 for obtaining operational parameters related to the telecommunications lines 5. For example, the access nodes 3 and/or the customer premises equipments 4 regularly report operational parameters to the prediction device 2 and/or send the operational parameters in response to a request from the prediction device 2. Before upgrading a telecommunication line 5 from the origin DSL technology to the target DSL technology, the prediction device 2 determines a prediction of the attainable bitrate on the telecommunication line 5 with the target DSL technology, in function of the obtained operational parameters. The prediction method is described in more details with reference to Figure 2. The prediction is based on a prediction algorithm or tool, referred to as "Upgrade Predictor", which determines a predicted value of the attainable bitrate on the telecommunication line 5 with the target DSL technology.

The prediction device 2 may be a network analyzer which, in addition to the prediction function mentioned before, performs other monitoring and/or troubleshooting tasks related to the access nodes 3, customer premises equipments 4 and telecommunication lines 5.

**Figure 2** is a flowchart of a method for predicting the attainable bitrates on telecommunication lines 5, executed by the prediction device 2. Groups of telecommunication lines 5 are successively upgraded from the origin DSL technology to the target DSL technology. For example, one group of telecommunication lines 5 is upgraded each day. By comparing the predicted attainable bitrates of the telecommunication lines 5 of a group, determined before the upgrade is performed, with the attainable bitrates measured after the upgrade has been performed, the prediction for the next group of telecommunication lines 5 may be improved.

Hereafter, index i refers to the successive groups of telecommunication lines 5 (initialized at i = 0 at step S0), and index j refer to the respective telecommunication lines 5 of a group. Lᵢⱼ denotes the line j of group i.

Before the group i is upgraded from the origin DSL technology to the target DSL technology, the prediction device 2 obtains operational parameters OPᵢⱼ for the respective lines Lᵢⱼ (step S1). The operational parameters OPᵢⱼ specify the quality and performance of the transmission on the line Lᵢⱼ, and include for example actual bitrate, output power, actual noise margin, actual INP, actual delay, loop attenuation, electrical length, some profile parameters (i.e band plan, maximum frequency, upstream power back-off parameters, downstream power-back-off parameters,...).

Then, the prediction device 2 determines predictions PredBRᵢⱼ of the attainable bitrate on the respective lines Lᵢⱼ with the target DSL technology (Step S2). The prediction PredBRᵢⱼ for line Lᵢⱼ depends on the operational parameters OPᵢⱼ and of prediction parameters PPᵢ. The prediction parameters PPᵢ specify assumptions about the environment of the telecommunication lines 5 (noise level, physical characteristics of the line, theoretical models, modem properties...) and may be referred as "expert settings". Various known techniques, including a tool called "Upgrade Predictor", exist for predicting an attainable bitrate in function of operational parameters and of prediction parameters (experts settings). The upgrade predictor uses the collected operational parameters to estimates the carrier data (i.e transfer function, SNR, QLN (Quiet Line Noise), PSD..) and to provide an estimated bitrate.

Moreover, the prediction PredBRᵢⱼ depends also on a correction CORᵢ. Initially (i=0), the correction CORᵢ does not influence the determination of the prediction PredBRᵢⱼ by the upgrade predictor. For successive groups i > 0, the correction CORᵢ and its influence on the output of the upgrade predictor will be described in more detail hereafter.

After the group i has been upgraded from the origin DSL technology to the target DSL technology, the prediction device 2 obtains the attainable bitrates BRᵢⱼ measures for the respective lines Lᵢⱼ (step S3).

When the next group of telecommunication lines 5 is considered (index i is incremented at step S4), the prediction device 2 determines the correction CORᵢ for the current group i in function of the predictions PredBR₍ᵢ₋₁₎ⱼ and the measured attainable bitrates BR₍ᵢ₋₁₎ⱼ of the previous group i-1 (step S5). When steps S1 and S2 are repeated for the current group i, the correction CORᵢ influence the determination of the predictions PredBRᵢⱼ by the upgrade predictor. In other words, the prediction PredBRᵢⱼ is determined in function of the operational parameters OPᵢⱼ, of prediction parameters PPᵢ and of the predictions PredBR₍ᵢ₋₁₎ⱼ and the measured attainable bitrates BR₍ᵢ₋₁₎ⱼ of the previous group i-1.

Various techniques may be used for determining the correction CORᵢ at step S5 and taking the correction CORᵢ into account when determining a prediction PredBRᵢⱼ at step S2.

For example, in an embodiment, the correction CORᵢ depends on the mean error between the predictions PredBR₍ᵢ₋₁₎ⱼ and the measured attainable bitrates BR₍ᵢ₋₁₎ⱼ for the lines L₍ᵢ₋₁₎ⱼ. At step S2, the prediction device 2 first determines an estimate of the predictions PredBRᵢⱼ by applying the upgrade predictor with the operational parameters OPᵢⱼ and the prediction parameters PPᵢ. Then, the prediction device 2 determines the predictions PredBRᵢⱼ by substracting the correction CORᵢ from the output of the upgrade predictor. A similar approach may be based on a correction CORᵢ in terms of mean relative error (in %).

In another embodiment, at step 2, the prediction device 2 first adapts a prediction algorithm or tool (for example the upgrade predictor) in function of the correction CORᵢ. For example, the prediction device 2 change the value of one or more prediction parameters PPᵢ used by the upgrade predictor. Then, the prediction device 2 determines the predictions PredBRᵢⱼ by applying the adapted prediction algorithm.

The order of steps shown on Figure 2 is given as an example. However, other order may be applied. For example, the operational parameters OPᵢⱼ for the group i may be obtained before obtaining the measured attanaible bitrate BR₍ᵢ₋₁₎ⱼ of the previous group i-1.

Since the predictions for a group of telecommunication lines 5 take into account a correction factor determined by comparing the predicted and measured attainable bitrates for a previous group of telecommunication lines 5, the quality of the prediction may be improved. This may be iterated for successive groups of telecommunication lines 5, such that the prediction will be more reliable and the upgrade predictor will be more robust.

In one embodiment, the telecommunication lines 5 to be upgraded are classified in different categories, based for example on the type of customer premises equipments 4. The prediction method may be applied independently for each category of line. Accordingly, respective systematic bias introduced on respective categories of telecommunication lines 5, for example by respective types of customer premises equipments, may be cancelled independently. In practice, this mean that corrections CORᵢ may be determined and applied for the respective categories.

In some embodiments, determining a prediction PredBRᵢⱼ at step S2 may comprise determining a plurality of estimates at successive times, for example one estimate by day, and determining the prediction PredBRᵢⱼ in function of the last N estimates. In this case, if one or more operational parameters are badly reported for one of the estimate, or an estimate is not available for a given day for any reason, the prediction PredBRᵢⱼ may be corrected by the aggregation of several estimates.

**Figure 3** is a structural view of the prediction device 2, which comprises a processor 6 and a memory 7. The memory 7 stores a computer program P which, when executed by the processor 6, cause the prediction device 2 to execute method described above with reference to Figure 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for determining a prediction (PredBRᵢⱼ) of an attainable bitrate on at least one second telecommunication line (5), executed by a prediction device (2), comprising:
- obtaining (S1) operational parameters (OPᵢⱼ) of at least one first telecommunication line (5) while the first telecommunication line (5) is used with an origin Digital Subscriber Line technology, and
- obtaining (S1) operational parameters (OPᵢⱼ) of at least one second telecommunication line (5) while the second telecommunication line (5) is used with the origin Digital Subscriber Line technology,- determining (S2) a prediction (PredBRᵢⱼ) of the attainable bitrate of the at least one first telecommunication line (5) with a target Digital Subscriber line technology, in function of the operational parameters (OPᵢⱼ) of the least one first telecommunication line,
- after the first telecommunication line (5) has been upgraded from the origin Digital Subscriber line technology to the target Digital Subscriber line technology, obtaining (S3) a measure of the attainable bitrate (BRᵢⱼ) of the at least one first telecommunication line (5),
- determining (S2) a prediction (PredBRᵢⱼ) of the attainable bitrate of the at least one second telecommunication line (5) with the target Digital Subscriber Line technology, in function of the operational parameters (OPᵢⱼ) of the least one second telecommunication line (5) and of the prediction (PredBR₍ᵢ₋₁₎ⱼ) of the attainable bitrate and the measured attainable bitrate (BR₍ᵢ₋₁₎ⱼ) of the at least one first telecommunication line (5).

2. Method according to claim 1, wherein the operational parameters (OPᵢᵢ) include at least one of an actual bitrate, an output power, an actual noise margin, an actual impulse noise protection, an actual delay, a loop attenuation, an electrical length, a band plan, a maximum frequency, an upstream power back-off parameter, a downstream power-back-off parameter.

3. Method according to one of claims 1 and 2, comprising iterating the step of determining (S2) a prediction of the attainable bitrate of the at least one second telecommunication line for successive groups of at least one telecommunication line.

4. Method according to one of claims 1 to 3, wherein determining (S2) a prediction of the attainable bitrate of the at least one second telecommunication line comprises:
- determining (S5) a correction (CORᵢ) in function of the difference between the prediction of the attainable bitrate and the measured attainable bitrate of the at least one first telecommunication line,
- determining an estimate of prediction of the attainable bitrate of the at least one second telecommunication line,
- substracting the correction from the estimate.

5. Method according to one of claims 1 to 3, wherein determining (S2) a prediction of the attainable bitrate of the at least one second telecommunication line comprises:
- adapting a prediction algorithm in function the prediction of the attainable bitrate and the measured attainable bitrate of the at least one first telecommunication line by changing at least one prediction parameter used by the prediction algorithm,
- determining the prediction of the attainable bitrate of the at least one second telecommunication line by using the adapted prediction algorithm.

6. Method according to claim 5, wherein the prediction parameters include at least one of a noise level, a physical characteristic of the second telecommunication line, a theoretical model and a modem property.

7. Method according to one of claims 1 to 6, wherein the prediction of the attainable bitrate of the at least one second telecommunication line is determined also in function of a category of the second telecommunication line.

8. Computer program product (P) comprising instructions which, when executed by a computer, cause the computer to carry out all the steps of the method of one of claims 1 to 7.

9. Prediction device (2) for determining a prediction (PredBRᵢⱼ) of an attainable bitrate on at least one second telecommunication line (5), comprising:
- means (6, 7, P) adapted to obtain operational parameters (OPᵢⱼ) of at least one first telecommunication line (5) while the first telecommunication line (5) is used with an origin Digital Subscriber Line technology, and
- means (6, 7, P) adapted to determine a prediction (PredBRᵢⱼ) of the attainable bitrate of the at least one first telecommunication line (5) with a target Digital Subscriber line technology, in function of the operational parameters (OPᵢⱼ) of the least one first telecommunication line,
- means (6, 7, P) adapted to obtain operational parameters (OPᵢⱼ) of at least one second telecommunication line (5) while the second telecommunication line (5) is used with the origin Digital Subscriber Line technology,
- means (6, 7, P) adapted to obtain a measure of the attainable bitrate (BRᵢⱼ) of the at least one first telecommunication line (5) after the first telecommunication line (5) has been upgraded from the origin Digital Subscriber line technology to the target Digital Subscriber line technology,
- means (6, 7, P) adapted to determine a prediction (PredBRᵢⱼ) of the attainable bitrate of the at least one second telecommunication line (5) with the target Digital Subscriber Line technology, in function of the operational parameters (OPᵢⱼ) of the least one second telecommunication line (5) and of the prediction (PredBR₍ᵢ₋₁₎ⱼ) of the attainable bitrate and the measured attainable bitrate (BR₍ᵢ₋₁₎ⱼ) of the at least one first telecommunication line (5).

## Patentansprüche

1. Verfahren zum Bestimmen einer Vorhersage (PredBRᵢⱼ) einer erreichbaren Bitrate an wenigstens einer zweiten Telekommunikationsleitung (5), ausgeführt durch eine Vorhersagevorrichtung (2), umfassend:
- Erlangen (S1) von Betriebsparametern (OPᵢⱼ) von wenigstens einer ersten Telekommunikationsleitung (5), während die erste Telekommunikationsleitung (5) mit einer Ausgangs-Digital-Subscriber-Line-Technik verwendet wird, und
- Erlangen (S1) von Betriebsparametern (OPᵢⱼ) von wenigstens einer zweiten Telekommunikationsleitung (5), während die zweite Telekommunikationsleitung (5) mit der Ausgangs-Digital-Subscriber-Line-Technik verwendet wird,
- Bestimmen (S2) einer Vorhersage (PredBRᵢⱼ) der erreichbaren Bitrate der wenigstens einer ersten Telekommunikationsleitung (5) mit einer Ziel-Digital-Subscriber-Line-Technik in Abhängigkeit von den Betriebsparametern (OPᵢⱼ) der wenigstens einen ersten Telekommunikationsleitung,
- nach dem Aufrüsten der ersten Telekommunikationsleitung (5) von der Ausgangs-Digital-Subscriber-Line-Technik auf die Ziel-Digital-Subscriber-Line-Technik, Erlangen (S3) eines Messwerts der erreichbaren Bitrate (BRᵢⱼ) der wenigstens einen ersten Telekommunikationsleitung (5),
- Bestimmen (S2) einer Vorhersage (PredBRᵢⱼ) der erreichbaren Bitrate der wenigstens einen zweiten Telekommunikationsleitung (5) mit der Ziel-Digital-Subscriber-Line-Technik in Abhängigkeit von den Betriebsparametern (OPᵢⱼ) der wenigstens einen zweiten Telekommunikationsleitung (5) und der Vorhersage (PredBR(ᵢ₋₁₎ⱼ) der erreichbaren Bitrate der gemessenen erreichbaren Bitrate (BR₍ᵢ₋₁₎ⱼ) der wenigstens einen ersten Telekommunikationsleitung (5).

2. Verfahren nach Anspruch 1, wobei die Betriebsparameter (OPᵢⱼ) wenigstens eins von einer tatsächlichen Bitrate, einer Ausgangsleistung, einer tatsächlichen Rauschgrenze, einem tatsächlichen Schutz vor Impulsrauschen, einer tatsächlichen Verzögerung, einer Schleifendämpfung, einer elektrischen Länge, einem Bandplan, einer maximalen Frequenz, einem vorgeschalteten Leistungs-Backoff-Parameter, einem nachgeschalteten Leistungs-Backoff-Parameter beinhalten.

3. Verfahren nach einem beliebigen der Ansprüche 1 und 2, umfassend Iterieren des Schritts des Bestimmens (S2) einer Vorhersage der erreichbaren Bitrate der wenigstens einen zweiten Telekommunikationsleitung für aufeinanderfolgende Gruppen von wenigstens einer Telekommunikationsleitung.

4. Verfahren nach einem beliebigen der Ansprüche 1 bis 3, wobei das Bestimmen (S2) einer Vorhersage der erreichbaren Bitrate der wenigstens einen zweiten Telekommunikationsleitung umfasst:
- Bestimmen (S5) einer Korrektur (CORᵢ) in Abhängigkeit von der Differenz zwischen der Vorhersage der erreichbaren Bitrate und der gemessenen erreichbaren Bitrate der wenigstens einen ersten Telekommunikationsleitung,
- Bestimmen einer Schätzung der Vorhersage der erreichbaren Bitrate der wenigstens einen zweiten Telekommunikationsleitung,
- Abziehen der Korrektur von der Schätzung.

5. Verfahren nach einem beliebigen der Ansprüche 1 bis 3, wobei das Bestimmen (S2) einer Vorhersage der erreichbaren Bitrate der wenigstens einen zweiten Telekommunikationsleitung umfasst:
- Anpassen eines Vorhersagealgorithmus in Abhängigkeit von der Vorhersage der erreichbaren Bitrate und der gemessenen erreichbaren Bitrate der wenigstens einen ersten Telekommunikationsleitung durch Ändern von wenigstens eines Vorhersageparameters, der von dem Vorhersagealgorithmus verwendet wird,
- Bestimmen der Vorhersage der erreichbaren Bitrate der wenigstens einen zweiten Telekommunikationsleitung durch Verwendung des angepassten Vorhersagealgorithmus.

6. Verfahren nach Anspruch 5, wobei die Vorhersageparameter wenigstens eins von einem Rauschpegel, einer physikalischen Charakteristik der zweiten Telekommunikationsleitung, einem theoretischen Modell und einer Modemeigenschaft beinhalten.

7. Verfahren nach einem beliebigen der Ansprüche 1 bis 6, wobei die Vorhersage der erreichbaren Bitrate der wenigstens einen zweiten Telekommunikationsleitung auch in Abhängigkeit von einer Kategorie der zweiten Telekommunikationsleitung bestimmt wird.

8. Computerprogrammprodukt (P), Anweisungen umfassend, die bei Ausführung durch einen Computer den Computer veranlassen, alle Schritte der Verfahren nach einem der Ansprüche 1 bis 7 auszuführen.

9. Vorhersagevorrichtung (2) zum Bestimmen einer Vorhersage (PredBRᵢⱼ) einer erreichbaren Bitrate an wenigstens einer zweiten Telekommunikationsleitung (5), umfassend:
- Mittel (6, 7, P), die zum Erlangen von Betriebsparametern (OPᵢⱼ) von wenigstens einer ersten Telekommunikationsleitung (5) angepasst sind, während die erste Telekommunikationsleitung (5) mit einer Ausgangs-Digital-Subscriber-Line-Technik verwendet wird, und
- Mittel (6, 7, P), die zum Bestimmen einer Vorhersage (PredBRᵢⱼ) der erreichbaren Bitrate der wenigstens einer ersten Telekommunikationsleitung (5) mit einer Ziel-Digital-Subscriber-Line-Technik in Abhängigkeit von den Betriebsparametern (OPᵢⱼ) der wenigstens einen ersten Telekommunikationsleitung angepasst sind,
- Mittel (6, 7, P), die zum Erlangen von Betriebsparametern (OPᵢⱼ) von wenigstens einer zweiten Telekommunikationsleitung (5) angepasst sind, während die zweite Telekommunikationsleitung (5) mit der Ausgangs-Digital-Subscriber-Line-Technik verwendet wird,
- Mittel (6, 7, P), die zum Erlangen eines Messwerts der erreichbaren Bitrate (BRᵢⱼ) der wenigstens einen ersten Telekommunikationsleitung (5) angepasst sind, nachdem die erste Telekommunikationsleitung (5) von der Ausgangs-Digital-Subscriber-Line-Technik auf die Ziel-Digital-Subscriber-Line-Technik aufgerüstet wurde,
- Mittel (6, 7, P), die zum Bestimmen einer Vorhersage (PredBRᵢⱼ) der erreichbaren Bitrate der wenigstens einen zweiten Telekommunikationsleitung (5) mit der Ziel-Digital-Subscriber-Line-Technik in Abhängigkeit von den Betriebsparametern (OPᵢⱼ) der wenigstens einen zweiten Telekommunikationsleitung (5) und der Vorhersage (PredBR(ᵢ₋₁₎ⱼ) der erreichbaren Bitrate und der gemessenen erreichbaren Bitrate (BR₍ᵢ₋₁₎ⱼ) der wenigstens einen ersten Telekommunikationsleitung (5) angepasst sind.

## Revendications

1. Procédé pour déterminer une prédiction (PredBRᵢⱼ) d'un débit binaire atteignable sur au moins une seconde ligne de télécommunication (5), exécuté par un dispositif de prédiction (2), comprenant les étapes suivantes :
- obtenir (S1) des paramètres opérationnels (OPᵢⱼ) d'au moins une première ligne de télécommunication (5) tandis que la première ligne de télécommunication (5) est utilisée avec une technologie de Ligne d'Abonné Numérique d'origine, et
- obtenir (S1) des paramètres opérationnels (OPᵢⱼ) d'au moins une seconde ligne de télécommunication (5) tandis que la seconde ligne de télécommunication (5) est utilisée avec la technologie de Ligne d'Abonné Numérique d'origine,
- déterminer (S2) une prédiction (PredBRᵢⱼ) du débit binaire atteignable de la au moins une première ligne de télécommunication (5) avec une technologie de Ligne d'Abonné Numérique cible, en fonction des paramètres opérationnels (OPᵢⱼ) de la au moins une première ligne de télécommunication,
- après que la première ligne de télécommunication (5) a été mise à niveau de la technologie de Ligne d'Abonné Numérique d'origine à la technologie de Ligne d'Abonné Numérique cible, obtenir (S3) une mesure du débit binaire atteignable (BRᵢⱼ) de la au moins une première ligne de télécommunication (5),
- déterminer (S2) une prédiction (PredBRᵢⱼ) du débit binaire atteignable de la au moins une seconde ligne de télécommunication (5) avec la technologie de Ligne d'Abonné Numérique cible, en fonction des paramètres opérationnels (OPᵢⱼ) de la au moins une seconde ligne de télécommunication (5) et de la prédiction (PredBR₍ᵢ₋₁₎ⱼ) du débit binaire atteignable et du débit binaire mesuré (BR₍ᵢ₋₁₎ⱼ) de la au moins une première ligne de télécommunication (5).

2. Procédé selon la revendication 1, dans lequel les paramètres opérationnels (OPᵢⱼ) incluent au moins l'un parmi un débit binaire réel, une puissance de sortie, une marge de bruit réelle, une protection contre le bruit impulsif réelle, un retard réel, un affaiblissement de boucle, une longueur électrique, un plan des bandes, une fréquence maximale, un paramètre de recul de puissance en amont, un paramètre de recul de puissance en aval.

3. Procédé selon l'une des revendications 1 et 2, comprenant l'itération de l'étape de détermination (S2) d'une prédiction du débit binaire atteignable de la au moins une seconde ligne de télécommunication pour des groupes successifs d'au moins une ligne de télécommunication.

4. Procédé selon l'une des revendications 1 à 3, dans lequel la détermination (S2) d'une prédiction du débit binaire atteignable de la au moins une seconde ligne de télécommunication comprend les étapes suivantes :
- déterminer (S5) une correction (CORᵢ) en fonction de la différence entre la prédiction du débit binaire atteignable et le débit binaire mesuré de la au moins une première ligne de télécommunication,
- déterminer une estimation de prédiction du débit binaire atteignable de la au moins une seconde ligne de télécommunication,
- soustraire la correction de l'estimation.

5. Procédé selon l'une des revendications 1 à 3, dans lequel la détermination (S2) d'une prédiction du débit binaire atteignable de la au moins une seconde ligne de télécommunication comprend les étapes suivantes :
- adapter un algorithme de prédiction en fonction de la prédiction du débit binaire atteignable et du débit binaire mesuré de la au moins une première ligne de télécommunication, en changeant au moins un paramètre de prédiction utilisé par l'algorithme de prédiction,
- déterminer la prédiction du débit binaire atteignable de la au moins une seconde ligne de télécommunication en utilisant l'algorithme de prédiction adapté.

6. Procédé selon la revendication 5, dans lequel les paramètres de prédiction incluent au moins l'un parmi un niveau de bruit, une caractéristique physique de la seconde ligne de télécommunication, un modèle théorique et une propriété de modem.

7. Procédé selon l'une des revendications 1 à 6, dans lequel la prédiction du débit binaire atteignable de la au moins une seconde ligne de télécommunication est également déterminée en fonction d'une catégorie de la seconde ligne de télécommunication.

8. Produit de programme d'ordinateur (P) comprenant des instructions qui, lorsqu'elles sont exécutées par un ordinateur, amènent l'ordinateur à effectuer toutes les étapes du procédé de l'une des revendications 1 à 7.

9. Dispositif de prédiction (2) pour déterminer une prédiction (PredBRᵢⱼ) d'un débit binaire atteignable sur au moins une seconde ligne de télécommunication (5), comprenant :
- des moyens (6, 7, P) adaptés pour obtenir des paramètres opérationnels (OPᵢⱼ) d'au moins une première ligne de télécommunication (5) tandis que la première ligne de télécommunication (5) est utilisée avec une technologie de Ligne d'Abonné Numérique d'origine, et
- des moyens (6, 7, P) adaptés pour déterminer une prédiction (PredBRᵢⱼ) du débit binaire atteignable de la au moins une première ligne de télécommunication (5) avec une technologie de Ligne d'Abonné Numérique cible, en fonction des paramètres opérationnels (OPᵢⱼ) de la au moins une première ligne de télécommunication,
- des moyens (6, 7, P) adaptés pour obtenir des paramètres opérationnels (OPᵢⱼ) d'au moins une seconde ligne de télécommunication (5) tandis que la seconde ligne de télécommunication (5) est utilisée avec la technologie de Ligne d'Abonné Numérique d'origine,
- des moyens (6, 7, P) adaptés pour obtenir une mesure du débit binaire atteignable (BRᵢⱼ) de la au moins une première ligne de télécommunication (5) après que la première ligne de télécommunication (5) a été mise à niveau de la technologie de Ligne d'Abonné Numérique d'origine à la technologie de Ligne d'Abonné Numérique cible,
- des moyens (6, 7, P) adaptés pour déterminer une prédiction (PredBRᵢⱼ) du débit binaire atteignable de la au moins une seconde ligne de télécommunication (5) avec la technologie de Ligne d'Abonné Numérique cible, en fonction des paramètres opérationnels (OPᵢⱼ) de la au moins une seconde ligne de télécommunication (5) et de la prédiction (PredBR₍ᵢ₋₁₎ⱼ) du débit binaire atteignable et du débit binaire mesuré (BR₍ᵢ₋₁₎ⱼ) de la au moins une première ligne de télécommunication (5).
